# FASCICULE DE BREVET EUROPEEN

(11) **EP 0 626 197 B1**
(45) Date de publication et mention de la délivrance du brevet: **25.11.1998**
(21) Numéro de dépôt: 94201372.3
(22) Date de dépôt: 16.05.1994
(51) Int. Cl.: B01J 4/00, B65G 53/08, C08F 2/34, C08F 10/00

(54) **Procédé et dispositif de déchargement d'un réacteur**
Verfahren und Anlage zum Austragen eines Reaktors
Process and device for unloading a reactor

(30) Priorité: 27.05.1993 BE 9300548
(43) Date de publication de la demande: 30.11.1994
(73) Titulaire: SOLVAY POLYOLEFINS EUROPE - BELGIUM (Société Anonyme), 1050 Bruxelles (BE)
(72) Inventeur: Ruelle, Jean-Jacques, B-1370 St.-Remy-Geest (BE)
(74) Mandataire: Troch, Geneviève

(56) Documents cités:
- DE-A- 3 545 339
- FR-A- 1 046 157
- US-A- 4 502 820

## Description

La présente invention concerne un procédé et un dispositif pour le déchargement d'un réacteur. Elle concerne plus particulièrement un procédé et un dispositif de déchargement d'un réacteur contenant à la fois une poudre et un gaz sous pression tel que, par exemple, un réacteur de polymérisation ou un réacteur à lit fluidisé. La présente invention concerne enfin un procédé de polymérisation des α-oléfines utilisant ce dispositif.

Il est connu de polymériser des α-oléfines au moyen d'un système catalytique contenant un composé d'un métal de transition appartenant aux groupes IIIb, IVb, Vb et VIb du Tableau Périodique (version publiée dans Handbook of Chemistry and Physics, 50me édition, page B-3, 1969-1970) et un activateur choisi parmi les composés organométalliques des groupes I à III du Tableau Périodique. De préférence le composé organométallique est un composé de l'aluminium et le composé du métal de transition est un solide à base de titane. Il est également connu d'effectuer cette polymérisation en maintenant le ou les monomères en phase gazeuse. Une telle polymérisation est alors généralement effectuée dans des réacteurs à lit fluidisé qui sont le plus souvent des réacteurs à axe vertical dans lesquels les particules de polymère en formation sont maintenues à l'état fluidisé par un courant gazeux ascendant contenant l'oléfine ou les oléfines à polymériser. Un tel réacteur comprend généralement, dans sa partie inférieure, une plaque perforée, couramment appelée grille de fluidisation, qui permet de répartir le courant gazeux nécessaire au maintien des particules de polymère à l'état fluidisé. Une tuyauterie latérale permet de décharger le réacteur d'une partie du polymère qui y est formé.

Un procédé connu pour effectuer ce déchargement comprend le transfert de manière discontinue par l'intermédiaire d'un courant gazeux et au moyen d'un dispositif de vannes adéquat d'une partie du lit fluidisé contenant le polymère dispersé dans la phase gazeuse d'un point situé en-dessous du sommet du lit fluidisé et au dessus de la grille de fluidisation vers une série de cuves travaillant à une pression inférieure à celle du réacteur de polymérisation. Dans ces cuves, le solide est séparé de la phase gazeuse par gravitation et cette dernière est réintroduite directement ou indirectement dans le réacteur de polymérisation en un point situé au-dessus du point de transfert. Le solide est alors envoyé vers la cuve suivante (EP-0071430).

US-A-4502820 décrit un dispositif de déchargement d'une enceinte de stockage à lit fluide consistant en une vis d'Archimède conventionnelle ne présentant ni diminution du pas ni augmentation du diamètre de l'axe.

DE-A-3545339 décrit un dispositif d'alimentation d'un réacteur sous pression au moyen d'une vis d'Archimède disposé dans un fourreau dans laquelle la poudre est compactée et compressée de manière à former un bouchon solide empêchant l'égalisation des pressions entre les différents récipients. Dans cette utilisation, le compactage est essentiel pour l'alimentation du réacteur sous pression et peut être obtenu par réduction de l'espace entre le fourreau et le pas de la vis, par diminution du pas de vis ou augmentation du diamètre de l'axe de la vis.

Les systèmes de déchargement appartenant a l'art antérieur présentent un certain nombre d'inconvénients à savoir :
- leur utilisation est relativement complexe du fait du grand nombre de vannes qu'ils contiennent. Par ailleurs ces vannes étant continuellement sollicitées, elles présentent des problèmes d'usure nécessitant un entretien important;
- on observe des fluctuations parfois importantes de la pression régnant dans le réacteur;
- la partie de lit fluidisé déchargée contenant une fraction de la phase gazeuse provenant du réacteur et contenant les monomères, la réaction de polymérisation se poursuit de manière anarchique dans les cuves de déchargement. Il s'avère en outre le plus souvent nécessaire de dégazer les poudres de polymère ainsi déchargées avant de les stocker et/ou de les manipuler ce qui implique des traitements supplémentaires des gaz issus de ce dégazage;
- enfin les poudres de polymère étant compactées par gravitation dans les cuves de déchargement, on peut observer la formation d'agglomérats susceptibles de perturber voire de bloquer le processus de déchargement. De tels inconvénients sont principalement rencontrés lors du déchargement de poudres collantes.

La présente invention vise dès lors à obtenir un procédé de déchargement d'un réacteur contenant à la fois une poudre et un gaz sous pression ne présentant pas les inconvénients des procédés appartenant à l'art antérieur.

A cet effet, la présente invention concerne un procédé de déchargement d'une poudre d'un réacteur contenant à la fois une poudre et un gaz sous pression au moyen d'un dispositif comprenant une zone de densification dans laquelle on diminue le volume disponible pour la poudre sans pour autant la compacter et qui est constituée par au moins une vis d'Archimède disposée dans un fourreau et présentant un rétrécissement du pas de vis et/ou une augmentation progressive du diamètre de l'axe de la vis.

Dans le cadre de la présente invention, on entend par gaz contenu dans le réacteur toute composition contenant un ou plusieurs composés se trouvant à l'état gazeux dans les conditions de température et de pression régnant dans ledit réacteur.

Le procédé selon la présente invention convient bien pour le déchargement d'un réacteur dans lequel un des réactifs est en phase gazeuse. A titre d'exemple de ces réacteurs, on peut citer les réacteurs de polymérisation en phase gazeuse.

Le procédé selon l'invention convient aussi pour le déchargement d'un réacteur à lit fluidisé. Il convient particulièrement bien pour le déchargement d'un réacteur de polymérisation en phase gazeuse à lit fluidisé.

La présente invention concerne également un dispositif de déchargement d'une poudre d'un réacteur contenant à la fois une poudre et un gaz sous pression comprenant au moins une zone de densification dans laquelle on diminue le volume disponible pour la poudre sans pour autant la compacter et qui est constituée par au moins une vis d'Archimède disposée dans un fourreau et présentant un rétrécissement du pas de vis et/ou une augmentation progressive du diamètre de l'axe de la vis.

Les dispositifs de déchargement préférés selon la présente invention comprennent une zone de densification dans laquelle la densification de la poudre se fait durant son transfert du point de connexion avec le réacteur vers l'extrémité opposée de ladite zone. Ledit point de connexion étant généralement le point habituellement utilisé pour décharger le réacteur.

Lorsque le réacteur est un réacteur à lit fluidisé, le point de connexion est généralement un point quelconque situé entre le sommet du lit fluidisé et la grille de fluidisation. Ce point est situé de préférence dans la partie inférieure de la zone ainsi définie.

La connexion entre le réacteur et la zone de densification peut être effectuée par n'importe quel moyen connu à cet effet. Elle comprend de préférence au moins une vanne permettant d'isoler le réacteur.

La zone de densification du dispositif selon l'invention est constituée par au moins une vis d'Archimède disposée dans un fourreau. Dans ce cas, la rotation de cette ou ces vis assure le transfert de la poudre du réacteur jusqu'à l'extrémité opposée du fourreau.

La densification de la poudre peut alors être assurée par un rétrécissement du pas de la vis. Elle peut également être assurée par une augmentation progressive du diamètre de son axe. L'utilisation de vis d'Archimède présentant à la fois un rétrécissement du pas et une augmentation du diamètre de l'axe rentre également dans le cadre de la présente invention. De préférence la zone de densification est constituée de deux vis co- ou contra-rotatives disposées dans un fourreau et présentant un rétrécissement du pas des vis. Les zones de densification constituées de deux vis co-rotatives donnent de particulièrement bons résultats.

Lorsque la zone de densification est constituée d'une ou plusieurs vis d'Archimède, on observe parallèlement au déplacement de la poudre une diminution progressive de la quantité de phase gazeuse provenant du réacteur et déchargée avec la poudre.

Les dispositifs de déchargement selon la présente invention peuvent également comprendre, à la suite de la zone de densification, une deuxième zone, appelée ci-après zone de dédensification. Selon la présente invention on entend par zone de dédensification une zone contenant un gaz inerte à une pression supérieure à la pression régnant dans le réacteur et dans laquelle on procède à une augmentation du volume disponible pour la poudre. Rentrent également dans le cadre de la présente invention les dispositifs de déchargement dans lesquels la densification et la dédensification de la poudre sont effectuées dans un seul volume comprenant une zone de densification et une zone de dédensification, distinctes ou non les unes des autres.

Le gaz inerte présent dans la zone de dédensification peut par exemple être de l'azote. Il se substitue en tout ou en partie aux gaz résiduels provenant de la phase gazeuse issue du réacteur qui ont été entraînés avec la poudre. Ce gaz inerte étant à pression supérieure à celle régnant dans le réacteur de polymérisation, il permet également d'empêcher ces gaz de progresser plus en avant dans le dispositif de déchargement.

Une zone de dédensification préférée selon la présente invention est constituée d'une ou plusieurs vis d'Archimède disposées dans un ou plusieurs fourreaux maintenus sous pression par un gaz inerte. L'augmentation du volume disponible pour la poudre est assurée, dans le cas d'une simple vis, par une diminution du diamètre de l'axe de cette dernière et/ou une augmentation de son pas. Dans le cas de deux vis co- ou contra-rotatives l'augmentation du volume disponible pour la poudre est générée par l'augmentation du pas de ces vis.

Lorsque la zone de densification et la zone de dédensification sont constituées d'une ou plusieurs vis d'Archimède tel que décrit ci-avant, la densification et la dédensification de la poudre sont avantageusement effectuées dans un seul fourreau dans lequel on dispose la ou les vis et dans lequel on définit consécutivement les deux zones. A titre d'exemple d'un tel dispositif on peut citer un fourreau contenant deux vis co-rotatives et présentant une première zone dans laquelle on diminue le pas des vis, suivie d'une deuxième zone dans laquelle on augmente le pas de ces vis tout en introduisant le gaz inerte via une tubulure latérale.

Les dispositifs de déchargement selon l'invention peuvent comprendre une ou plusieurs séquences consécutives contenant une zone de densification et une zone de dédensification telles que définies ci-avant.

Enfin les dispositifs de déchargement selon la présente invention se terminent le plus souvent par une zone permettant le déchargement final du réacteur. Cette zone, appelée ci-après zone terminale, peut être par exemple une zone dans laquelle s'effectue le déchargement ou le stockage de la poudre ou encore une zone intermédiaire vers les dispositifs habituels de granulation ou de traitement des poudres.

Entrent également dans le cadre de la présente invention, les dispositifs contenant des éléments additionnels tels que par exemple et à titre non limitatif les éléments permettant l'introduction d'additifs à la poudre issue du réacteur ou les éléments permettant le dégazage d'une partie de la phase gazeuse présente dans lesdits dispositifs ainsi que le traitement de cette partie de phase gazeuse. De tels éléments peuvent être disposés en n'importe quel endroit des dispositifs selon la présente invention. On remarque néanmoins que, lorsque les dispositifs selon la présente invention permettent de diminuer la quantité de phase gazeuse provenant du réacteur, cette opération de dégazage peut avantageusement être supprimée.

Les dispositifs selon l'invention conviennent bien pour le déchargement de réacteurs de polymérisation en phase gazeuse.

Ils conviennent également bien pour le déchargement de réacteurs à lit fluidisé et plus particulièrement pour ceux dans lesquels un des réactifs est en phase gazeuse.

Ces dispositifs sont de préférence utilisés pour le déchargement des réacteurs de polymérisation à lit fluidisé.

On obtient de bons résultats en utilisant les dispositifs selon la présente invention pour le déchargement des réacteurs de polymérisation en phase gazeuse des α-oléfines contenant de 2 à 22 atomes de carbone.

Dans le cadre de la présente invention on entend par polymérisation des α-oléfines l'homopolymérisation de ces dernières ou la copolymérisation de ces dernières entre elles ou avec d'autres monomères insaturés tels que, par exemple, les acides organiques insaturés et leurs dérivés ou les dioléfines conjuguées ou non.

Les dispositifs de déchargement selon la présente invention sont particulièrement simples et peu consommateurs d'énergie. Ils permettent de minimiser la longueur des transitions des produits du fait qu'ils n'introduisent pas de volumes hors réacteur. Par ailleurs, ils ne comprennent que peu de vannes et ne nécessitent de ce fait que peu d'entretien et de surveillance.

Les dispositifs de déchargement selon la présente invention qui permettent de diminuer la quantité de phase gazeuse provenant du réacteur possèdent un avantage supplémentaire du fait qu'ils permettent de limiter voire de supprimer les réactions anarchiques susceptibles de se produire dans lesdits dispositifs. Dans ce cas particulier et comme décrit ci-avant, il est en outre le plus souvent superflu d'inclure des éléments additionnels de dégazage. Enfin, les dispositifs selon la présente invention permettent d'effectuer les traitements des poudres directement après le réacteur ce qui permet de réaliser l'économie des silos et transports pneumatiques généralement nécessaires à ces traitements.

La présente invention concerne également un procédé pour le déchargement d'un réacteur contenant à la fois une poudre et un gaz sous pression au moyen des dispositifs décrits ci-avant.

Selon le procédé de l'invention, une fraction de la poudre est déchargée, en continu ou en discontinu, dans une zone de densification dans laquelle on diminue le volume disponible pour la poudre sans pour autant la compacter.

A l'extrémité de la zone de densification, la poudre est le plus souvent dédensifiée dans une zone de dédensification tout en étant diluée par un gaz inerte. La poudre est alors éventuellement transférée dans une zone terminale dans laquelle se fait le déchargement final du réacteur.

Rentrent également dans le cadre de la présente invention les procédés de déchargement dans lesquels une fraction de la poudre est déchargée dans un seul volume comprenant une zone de densification et une zone de dédensification distinctes ou non les unes des autres avant d'être éventuellement transférée dans la zone terminale.

Le transfert dans la zone terminale peut être effectué soit directement après la zone de dédensification soit indirectement par l'intermédiaire d'une ou plusieurs séquences consécutives comprenant une zone de densification et une zone de dédensification.

Le transfert de la poudre au travers du dispositif de déchargement selon la présente invention peut être effectué par n'importe quel moyen connu à cet effet.

Le déchargement du réacteur peut être avantageusement facilité en inclinant la zone de densification de manière à ce que l'extrémité opposée au point de connexion soit située à un niveau inférieur audit point de connexion. Il est également possible d'appliquer au dispositif de déchargement une pression inférieure à celle régnant dans le réacteur.

Un procédé de déchargement particulièrement préféré selon la présente invention comprend le déchargement d'un réacteur au moyen d'une ou plusieurs vis d'Archimède disposées dans un ou plusieurs fourreaux dans le(s)quel(s) on a défini consécutivement et comme décrit ci-avant une zone de densification et une zone de dédensification. La densification de la poudre est assurée de préférence par une diminution du pas des vis. La dédensification de cette dernière est alors assurée par une augmentation de ce pas. Le gaz inerte peut être introduit dans la zone de dédensification via une tubulure latérale.

Dans ce cas particulier le transfert de la poudre du réacteur jusqu'à l'extrémité de la zone de dédensification est assuré par la rotation des vis. Cette rotation doit être suffisante pour assurer le transfert de la poudre sans pour autant conduire à son compactage. Elle est en outre le plus souvent choisie de manière à ce qu'il n'y ait pas de fusion des particules de ladite poudre. On observe, durant ce transfert, une diminution de la quantité de phase gazeuse provenant du réacteur.

La poudre est ensuite déchargée dans une zone terminale.

Selon la présente invention, le réacteur est de préférence déchargé de manière continue. La quantité de poudre déchargée par unité de temps dépend de nombreux paramètres tels que par exemple le point de connexion de la zone de densification au réacteur, l'éventuelle inclinaison de ladite zone, les éventuelles différences de pression et/ou la vitesse de rotation des vis d'Archimède. Lorsque la zone de densification est constituée d'une ou plusieurs vis, il est possible de régler la vitesse de rotation de ces vis de manière à ce que la quantité de poudre déchargée par unité de temps soit égale à la quantité de poudre formée au sein du réacteur.

Un tel procédé convient bien pour le déchargement de réacteur de polymérisation en phase gazeuse.

Il convient aussi pour le déchargement des réacteurs à lit fluidisé et en particulier pour ceux dans lesquels au moins un des réactifs est en phase gazeuse. Dans ce cas, la poudre est généralement déchargée d'un point du réacteur situé entre le sommet du lit fluide et la grille de fluidisation dans la zone de densification. Ce procédé est de préférence mis en oeuvre pour le déchargement des réacteurs de polymérisation à lit fluidisé. On obtient de bons résultats en mettant en oeuvre un tel procédé pour le déchargement des réacteurs de (co)polymérisation en phase gazeuse des α-oléfines contenant de 2 à 22 atomes de carbone.

Le procédé de déchargement selon l'invention présente de nombreux avantages.

Il permet le déchargement aisé d'un réacteur contenant une poudre et un gaz sous pression en maintenant constante la pression régnant au sein de ce réacteur. De plus lorsque le procédé de déchargement fonctionne en continu, le débit de déchargement peut être réglé en fonction de la vitesse de la réaction de formation de la poudre ce qui permet de maintenir constante la quantité de poudre dans le réacteur.

Un autre avantage de l'invention est la possibilité de diminuer considérablement la quantité de phase gazeuse provenant du réacteur contenue dans la poudre issue du dispositif de déchargement. De ce fait cette poudre ne doit pas subir des traitements complémentaires et peut être manipulée sans danger. Un tel avantage est aisément obtenu en réglant, par exemple, la longueur de la zone de densification et/ou le nombre de séquence zone de densification/zone de dédensification du dispositif de déchargement.

On constate également que le déchargement des poudres est fortement facilité. Un tel avantage est particulièrement souhaitable dans le cas du déchargement de poudres collantes.

La présente invention concerne enfin un procédé de polymérisation en phase gazeuse au moyen d'un réacteur à lit fluidisé utilisant le dispositif de déchargement décrit ci-avant. La réaction de polymérisation est généralement effectuée au moyen d'un système catalytique contenant un composé d'un métal de transition appartenant aux groupes IIIb, IVb, Vb et VIb du Tableau Périodique et pouvant contenir un activateur choisi parmi les composés organométalliques des groupes I à III du Tableau Périodique. De préférence le composé du métal de transition est un solide à base de titane et le composé organométallique est un composé de l'aluminium. La réaction de polymérisation peut également être effectuée au moyen d'un catalyseur à base de chrome déposé sur un support à base de silice.

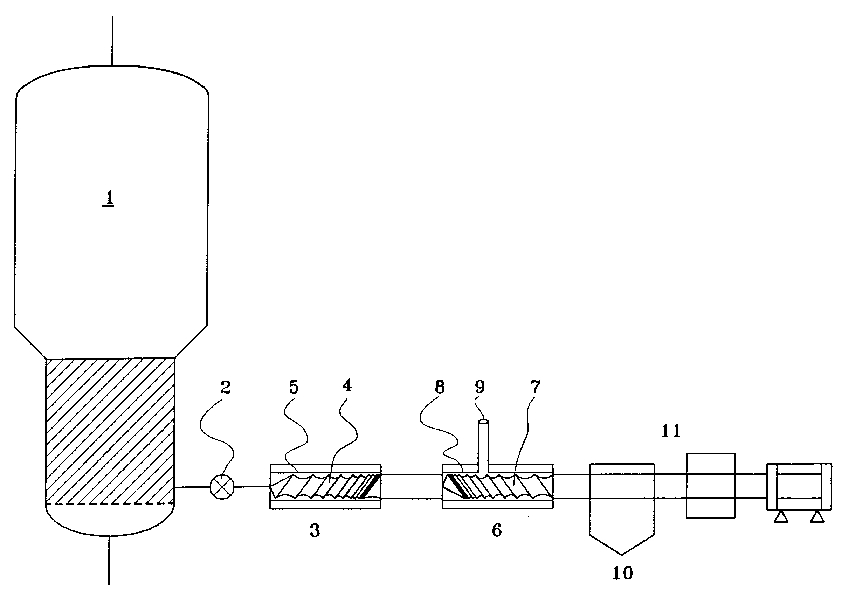

La présente invention est illustrée par l'exemple suivant qui fait référence à la figure unique dans laquelle sont représentés schématiquement :
- un réacteur à lit fluidisé - 1;
- une vanne permettant d'isoler le réacteur à lit fluidisé - 2;
- une zone de densification - 3. Cette zone est constituée d'une double vis - 4 - disposée dans un fourreau - 5 - et dont le pas est progressivement diminué;
- une zone de dédensification - 6. Cette zone est également constituée d'une double vis - 7 - disposée dans un fourreau - 8 - maintenu sous pression d'azote via une tubulure latérale - 9 - et dont le pas est progressivement augmenté;
- la zone terminale permettant le déchargement final du réacteur - 10;
- un moteur - 11 - permettant la rotation de l'axe des vis.

### Exemple 1

Un réacteur - 1 - de polymérisation de propylène en lit fluidisé à axe vertical opérant à une pression d'environ 500 psig (35 10⁵ Pa) et à une température comprise entre 80 et 110 °C est déchargé en continu au travers d'une vanne - 2 - et au moyen d'un dispositif comprenant une double vis co-rotative constituée des éléments constitutifs habituels des extrudeuses à double vis co-rotatives telles que décrites dans "SCHNECKEN MASCHINEN IN DER VERFAHRENSTECHNIK" Edition Springer Verlag (1972), pages 60-66, 120-128 et 151-154. Dans cette double vis, sont disposées consécutivement une zone de densification - 3 - et une zone de dédensification - 6. Dans la zone de densification on diminue progressivement le pas des vis - 4 - de manière à ce que la poudre soit densifiée sans qu'il y ait compactage. On constate également qu'il n'y a pas fusion des particules de polymère. Dans la zone de dédensification, maintenue sous une pression de 520 psig (36,4 10⁵ Pa) d'azote via la tubulure latérale - 9 - on augmente progressivement le pas des vis - 7 - de sorte que le volume disponible pour la poudre soit augmenté. La rotation de la double vis est assurée par un moteur - 11 - et est ajustée de manière telle que la hauteur du sommet du lit fluidisé reste constante. A l'extrémité de la zone de dédensification la poudre de polymère est déchargée dans une cuve - 10.

## Revendications

1. Procédé de déchargement d'une poudre d'un réacteur contenant à la fois une poudre et un gaz sous pression au moyen d'un dispositif comprenant une zone de densification dans laquelle on diminue le volume disponible pour la poudre sans pour autant la compacter et qui est constituée par au moins une vis d'Archimède disposée dans un fourreau et présentant un rétrécissement du pas de vis et/ou une augmentation progressive du diamètre de l'axe de la vis.

2. Procédé selon la revendication 1, appliqué au déchargement d'un réacteur dans lequel un des réactifs est en phase gazeuse.

3. Procédé de déchargement selon l'une quelconque des revendications 1 à 2, appliqué au déchargement d'un réacteur à lit fluidisé.

4. Procédé selon la revendication 3, caractérisé en ce que la poudre est déchargée d'un point situé entre le sommet du lit fluidisé et la grille de fluidisation.

5. Procédé selon l'une quelconque des revendications 1 à 4, appliqué au déchargement d'un réacteur de polymérisation.

6. Procédé selon la revendication 5, appliqué au déchargement d'un réacteur de polymérisation en phase gazeuse des α-oléfines contenant de 2 à 22 atomes de carbone.

7. Procédé selon l'une quelconque des revendications 1 à 6, caractérisé en ce que la densification de la poudre est accompagnée d'une diminution de la quantité de phase gazeuse provenant du réacteur.

8. Procédé selon l'une quelconque des revendications 1 ou 7, caractérisé en ce que la zone de densification est constituée de deux vis co- ou contra-rotatives.

9. Procédé selon la revendication 8, caractérisé en ce que les deux vis sont co-rotatives.

10. Procédé selon l'une quelconque des revendications 1 à 9, caractérisé en ce que la poudre est ensuite dédensifiée dans une zone de dédensification contenant un gaz inerte à pression supérieure à la pression régnant dans le réacteur et dans laquelle on augmente le volume disponible pour la poudre tout en la diluant par un gaz inerte.

11. Procédé selon la revendication 10, caractérisé en ce que la densification et la dédensification de la poudre sont effectuées dans un seul volume comprenant une zone de densification et une zone de dédensification distinctes ou non les unes des autres.

12. Procédé selon l'une quelconque des revendications 10 et 11, caractérisé en ce que la zone de dédensification est constituée d'une ou plusieurs vis d'Archimède disposées dans un ou plusieurs fourreaux maintenus sous pression par un gaz inerte.

13. Procédé selon la revendication 12, caractérisé en ce que le déchargement de la poudre est effectué au moyen d'un dispositif constitué d'un fourreau contenant deux vis co-rotatives présentant une première zone de densification dans laquelle on diminue le pas des vis suivie d'une deuxième zone de dédensification dans laquelle on augmente le pas de ces vis tout en introduisant le gaz inerte via une tubulure latérale.

14. Procédé selon l'une quelconque des revendications 10 à 13, caractérisé en ce qu'il contient plusieurs séquences de densification et de dédensification.

15. Procédé selon l'une quelconque des revendications 1 à 14, comprenant le déchargement final du réacteur dans une zone terminale.

16. Dispositif de déchargement d'une poudre d'un réacteur contenant à la fois une poudre et un gaz sous pression comprenant au moins une zone de densification dans laquelle on diminue le volume disponible pour la poudre sans pour autant la compacter et qui est constituée par au moins une vis d'Archimède disposée dans un fourreau et présentant un rétrécissement du pas de vis et/ou une augmentation progressive du diamètre de l'axe de la vis.

17. Dispositif de déchargement selon la revendication 16, appliqué au déchargement d'un réacteur à lit fluidisé.

18. Dispositif selon l'une quelconque des revendications 16 à 17, caractérisé en ce que la densification de la poudre se fait durant son transfert du point de connexion avec le réacteur vers l'extrémité opposée de la zone de densification.

19. Dispositif selon l'une quelconque des revendications 16 à 18, caractérisé en ce que la densification de la poudre est accompagnée d'une diminution de la quantité de phase gazeuse provenant du réacteur.

20. Dispositif selon l'une quelconque des revendications 16 à 19, caractérisé en ce que la zone de densification est constituée de deux vis co- ou contra-rotatives.

21. Dispositif selon la revendication 20, caractérisé en ce que les deux vis sont co-rotatives.

22. Dispositif selon l'une quelconque des revendications 16 à 21, caractérisé en ce qu'il comprend, à la suite de la zone de densification, une zone de dédensification contenant un gaz inerte à pression supérieure à la pression régnant dans le réacteur et dans laquelle on augmente le volume disponible pour la poudre.

23. Dispositif selon la revendication 22, caractérisé en ce que la densification et la dédensification de la poudre sont effectuées dans un seul volume comprenant une zone de densification et une zone de dédensification distinctes ou non les unes des autres.

24. Dispositif selon l'une quelconque des revendications 22 et 23, caractérisé en ce que la zone de dédensification est constituée d'une ou plusieurs vis d'Archimède disposées dans un ou plusieurs fourreaux maintenus sous pression par un gaz inerte.

25. Dispositif selon la revendication 24, caractérisé en ce qu'il est constitué d'un fourreau contenant deux vis co-rotatives présentant une première zone dans laquelle on diminue le pas des vis suivie d'une deuxième zone dans laquelle on augmente le pas de ces vis tout en introduisant le gaz inerte via une tubulure latérale.

26. Dispositif selon l'une quelconque des revendications 16 à 25, caractérisé en ce qu'il contient plusieurs séquences constituées d'une zone de densification et d'une zone de dédensification.

27. Dispositif selon l'une quelconque des revendications 16 à 26, caractérisé en ce qu'il contient une zone terminale permettant le déchargement final du réacteur.

28. Procédé de polymérisation des α-oléfines en phase gazeuse, caractérisé en ce que le polymère est déchargé en utilisant le dispositif selon l'une quelconque des revendications 16 à 27.

## Claims

1. Process for discharging a powder from a reactor containing both a powder and a gas under pressure, by means of a device including a densification zone in which the volume available for the powder is decreased without, however, compacting it and which consists of at least one Archimedes' screw arranged in a barrel and exhibiting a decrease in the screw pitch and/or a gradual increase in the diameter of the shaft of the screw.

2. Process according to Claim 1, applied to the discharging of a reactor in which one of the reactants is in gaseous phase.

3. Process for discharging according to any one of Claims 1 to 2, applied to the discharging of a fluidized bed reactor.

4. Process according to Claim 3, characterized in that the powder is discharged from a point situated between the top of the fluidized bed and the fluidization grid.

5. Process according to any one of Claims 1 to 4, applied to the discharging of a polymerization reactor.

6. Process according to Claim 5, applied to the discharging of a reactor for gas phase polymerization of α-olefins containing from 2 to 22 carbon atoms.

7. Process according to any one of Claims 1 to 6, characterized in that the densification of the powder is accompanied by a decrease in the quantity of gaseous phase originating from the reactor.

8. Process according to either of Claims 1 or 7, characterized in that the densification zone consists of two co- or counterrotating screws.

9. Process according to Claim 8, characterized in that the two screws are corotating.

10. Process according to any one of Claims 1 to 9, characterized in that the powder is next dedensified in a dedensification zone containing an inert gas at a pressure higher than the pressure prevailing in the reactor and in which the volume available for the powder is increased while the powder being diluted with an inert gas.

11. Process according to Claim 10, characterized in that the densification and the dedensification of the powder are performed in a single volume including a densification zone and a dedensification zone which are or are not distinct from one another.

12. Process according to either of Claims 10 and 11, characterized in that the dedensification zone consists of one or more Archimedes' screws arranged in one or more barrels maintained under pressure by an inert gas.

13. Process according to Claim 12, characterized in that the discharging of the powder is carried out by means of a device consisting of a barrel containihg two corotating screws which have a first zone of densification in which the pitch of the screws is decreased, followed by a second zone of dedensification in which the pitch of these screws is increased while the inert gas is introduced through a side pipe.

14. Process according to any one of Claims 10 to 13, characterized in that it contains several sequences of densification and of dedensification.

15. Process according to any one of Claims 1 to 14, comprising the final discharging of the reactor in a terminal zone.

16. Device for discharging a powder from a reactor containing both a powder and a gas under pressure, including at least one densification zone in which the volume available for the powder is decreased without, however, compacting it and which consists of at least one Archimedes' screw arranged in a barrel and exhibiting a decrease in the screw pitch and/or a gradual increase in the diameter of the shaft of the screw.

17. Device for discharging according to Claim 16, applied to the discharging of a fluidized bed reactor.

18. Device according to any one of Claims 16 to 17, characterized in that the densification of the powder takes place during its transfer from the point of connection with the reactor towards the opposite end of the densification zone.

19. Device according to any one of Claims 16 to 18, characterized in that the densification of the powder is accompanied by a decrease in the quantity of gaseous phase originating from the reactor.

20. Device according to either of Claims 16 and 19, characterized in that the densification zone consists of two co- or counterrotating screws.

21. Device according to Claim 20, characterized in that the two screws are corotating.

22. Device according to any one of Claims 16 to 21, characterized in that, following the densification zone, it includes a dedensification zone containing an inert gas at a pressure higher than the pressure prevailing in the reactor and in which the volume available for the powder is increased.

23. Device according to Claim 22, characterized in that the densification and the dedensification of the powder are performed in a single volume including a densification zone and a dedensification zone which are or are not distinct from one another.

24. Device according to either of Claims 22 and 23, characterized in that the dedensification zone consists of one or more Archimedes' screws arranged in one or more barrels maintained under pressure by an inert gas.

25. Device according to Claim 24, characterized in that it consists of a barrel containing two corotating screws which have a first zone in which the pitch of the screws is decreased, followed by a second zone in which the pitch of these screws is increased while the inert gas is introduced through a side pipe.

26. Device according to any one of Claims 16 to 25, characterized in that it contains several sequences consisting of a densification zone and of a dedensification zone.

27. Device according to any one of Claims 16 to 26, characterized in that it contains a terminal zone permitting the final discharging of the reactor.

28. Process for the gas phase polymerization of α-olefins, characterized in that the polymer is discharged by employing the device according to any one of Claims 16 to 27.

## Patentansprüche

1. Verfahren zur Entladung eines Pulvers aus einem Reaktor, der gleichzeitig ein Pulver und ein Gas unter Druck enthält, mit Hilfe einer Vorrichtung, die eine Verdichtungszone umfaßt, in der das für das Pulver verfügbare Volumen verringert wird, ohne es dabei zu verfestigen, und die aus mindestens einer Archimedischen Schnecke gebildet wird, die in einer Scheide angeordnet ist, und eine Verengung des Schneckengangs und/oder eine fortschreitende Erhöhung des Durchmessers der Achse der Schnecke aufweist.

2. Verfahren nach Anspruch 1, das angewendet wird zur Entladung eines Reaktors, in dem einer der reaktiven Bestandteile in Gasphase ist.

3. Verfahren zur Entladung nach einem der Ansprüche 1 und 2, das angewendet wird zur Entladung eines Wirbelbettreaktors.

4. Verfahren nach Anspruch 3, dadurch gekennzeichnet, daß das Pulver an einem Punkt entladen wird, der zwischen dem Scheitel des Wirbelbetts und dem Wirbelgitter angeordnet ist.

5. Verfahren nach einem der Ansprüche 1 bis 4, das angewendet wird zur Entladung eines Polymerisationsreaktors.

6. Verfahren nach Anspruch 5, das angewendet wird zur Entladung eines Reaktors für Gasphasenpolymerisation von α-Olefinen mit 2 bis 22 Kohlenstoffatomen.

7. Verfahren nach einem der Ansprüche 1 bis 6, dadurch gekennzeichnet, daß die Verdichtung des Pulvers von einer Verringerung der Menge an Gasphase, die aus dem Reaktor stammt, begleitet wird.

8. Verfahren nach einem der Ansprüche 1 bis 7, dadurch gekennzeichnet, daß die Verdichtungszone aus zwei gleich- oder gegenläufigen Schnecken gebildet wird.

9. Verfahren nach Anspruch 8, dadurch gekennzeichnet, daß die beiden Schnecken gleichlaufend sind.

10. Verfahren nach einem der Ansprüche 1 bis 9, dadurch gekennzeichnet, daß das Pulver dann in einer Auflockerungszone aufgelockert wird, die ein Inertgas enthält, mit einem Druck, der höher ist als der Druck, der in dem Reaktor herrscht, und in der man das für das Pulver verfügbare Volumen erhöht, indem man mit einen Inertgas verdünnt.

11. Verfahren nach Anspruch 10, dadurch gekennzeichnet, daß die Verdichtung und die Auflockerung des Pulvers in einem einzigen Volumen bewirkt werden, das eine Verdichtungszone und eine Auflockerungszone umfaßt, die voneinander verschieden sind oder nicht.

12. Verfahren nach einem der Ansprüche 10 oder 11, dadurch gekennzeichnet, daß die Auflockerungszone von einer oder mehreren Archimedischen Schnecken gebildet wird, die in einer oder mehreren Scheiden angeordnet sind, die durch ein Inertgas unter Druck gehalten werden.

13. Verfahren nach Anspruch 12, dadurch gekennzeichnet, daß die Entladung des Pulvers bewirkt wird mit Hilfe einer Vorrichtung, die aus einer Scheide gebildet wird, die zwei gleichlaufende Schnecken enthält, die eine erste Verdichtungszone, in der die Ganghöhe der Schnecken verringert wird, gefolgt von einer zweiten Zone zur Auflockerung, in der die Ganghöhe der Schnecken erhöht wird, aufweist, wobei man das Inertgas über einen seitlichen Rohrstutzen einführt.

14. Verfahren nach einem der Ansprüche 10 bis 13, dadurch gekennzeichnet, daß mehrere Sequenzen der Verdichtung und Auflockerung vorhanden sind.

15. Verfahren nach einem der Ansprüche 1 bis 14, umfassend die endgültige Entladung des Reaktors in einer Endzone.

16. Vorrichtung zur Entladung eines Pulvers aus einem Reaktor, der gleichzeitig ein Pulver und ein Gas unter Druck enthält, umfassend mindestens eine Verdichtungszone, in der das für das Pulver verfügbare Volumen abnimmt, ohne es zu verfestigen, und die von mindestens einer Archimedischen Schnecke gebildet wird, die in einer Scheide angeordnet ist, und eine Verengung des Schneckengangs und/oder eine fortschreitende Erhöhung des Durchmessers der Achse der Schraube aufweist.

17. Vorrichtung zur Entladung nach Anspruch 16, die zur Entladung eines Wirbelbettreaktors angewendet wird.

18. Vorrichtung nach einem der Ansprüche 16 oder 17, dadurch gekennzeichnet, daß die Verdichtung des Pulvers während des Transportes von dem Anschlußpunkt mit dem Reaktor zu dem des Verdichtungszone gegenüberliegenden Ende durchgeführt wird.

19. Vorrichtung nach einem der Ansprüche 16 bis 18, dadurch gekennzeichnet, daß die Verdichtung des Pulvers von einer Verringerung der Menge an Gasphase, die aus dem Reaktor stammt, begleitet wird.

20. Vorrichtung nach einem der Ansprüche 16 bis 19, dadurch gekennzeichnet, daß die Verdichtungszone von zwei gegen- oder gleichlaufenden Schnecken gebildet wird.

21. Vorrichtung nach Anspruch 20, dadurch gekennzeichnet, daß die beiden Schnecken gleichlaufend sind.

22. Vorrichtung nach einem der Ansprüche 16 bis 21, dadurch gekennzeichnet, daß sie im Anschluß an die Verdichtungszone eine Auflockerungszone aufweist, die ein Inertgas enthält mit einem Druck, der höher ist als der Druck, der in dem Reaktor herrscht, und in der man das für das Pulver verfügbare Volumen erhöht.

23. Vorrichtung nach Anspruch 22, dadurch gekennzeichnet, daß die Verdichtung und die Anflockerung des Pulvers in einem einzigen Volumen bewirkt werden, das eine Verdichtungszone und eine Auflockerungszone umfaßt, die voneinander verschieden sind oder nicht.

24. Vorrichtung nach einem der Ansprüche 22 oder 23, dadurch gekennzeichnet, daß die Auflockerungszone aus einer oder mehreren Archimedischen Schnecken gebildet wird, die in einer oder mehreren Scheiden angeordnet sind und durch ein Inertgas unter Druck gehalten werden.

25. Vorrichtung nach Anspruch 24, dadurch gekennzeichnet, daß sie von einer Scheide gebildet wird, die zwei gleichlaufende Schnecken aufweist, die eine erste Zone, in der der Schneckengang vermindert wird, gefolgt von einer zweiten Zone, in der der Schneckengang erhöht wird, aufweist, wobei ein Inertgas über einen seitlichen Rohrstutzen eingeleitet wird.

26. Vorrichtung nach einem der Ansprüche 16 bis 25, dadurch gekennzeichnet, daß sie mehrere Sequenzen enthält, die durch eine Verdichtungszone und eine Auflockerungszone gebildet werden.

27. Vorrichtung nach einem der Ansprüche 16 bis 26, dadurch gekennzeichnet, daß sie eine Endzone aufweist, die die endgültige Entladung des Reaktors zuläßt.

28. Verfahren zur Polymerisation von α-Olefinen in Gasphase, dadurch gekennzeichnet, daß das Polymer entladen wird unter Verwendung einer Vorrichtung nach einem der Ansprüche 16 bis 27.
